# EUROPÄISCHE PATENTSCHRIFT

(11) **EP 0 727 357 B1**
(45) Veröffentlichungstag und Bekanntmachung des Hinweises auf die Patenterteilung: **14.04.1999**
(21) Anmeldenummer: 96100954.5
(22) Anmeldetag: 24.01.1996
(51) Int. Cl.: B65B 55/02, B65B 61/02

(54) **Aseptisch arbeitende FFS-Maschine**
Aseptically operating form-, fill-, and sealing machine
Machine de formage, de remplissage et de scellement opérant de façon aseptique

(30) Priorität: 16.02.1995 DE 19505197
(43) Veröffentlichungstag der Anmeldung: 21.08.1996
(73) Patentinhaber: Hassia Verpackungsmaschinen GmbH, D-63691 Ranstadt (DE)
(72) Erfinder: Kurth, Günter, D-63691 Ranstadt (DE)
(74) Vertreter: Wolf, Günter, Dipl.-Ing.

(56) Entgegenhaltungen:
- DE-A- 2 339 517
- GB-A- 1 596 524

## Beschreibung

Die Erfindung betrifft eine aseptisch arbeitende FFS-Maschine zum Formen, Seitenwanddekorieren, Füllen und Schließen von an einer getaktet geförderten Packstoffbahn auszubildenden Bechern gemäß Oberbegriff des Patentanspruches 1.

Soweit bekannt, konnten steril behandelte Packstoffbahnen im zuge des Durchlaufes durch solche aseptisch arbeitende FFS-Maschinen, und zwar weder bei sogenannten Volltunnelmaschinen (siehe FR-A-2 442 124) noch bei Halbtunnelmaschinen nach der vorerwähnten DE-A-2 339 517 mit einer Seitenwanddekorierung (Etiketten, Banderolen) ausgestattet werden, d.h., nach wie vor werden solchen FFS-Maschinen kostenaufwendige Dekoranbringungseinrichtungen als separate, zusätzlichen Raum beanspruchende Maschinen in mehr oder weniger großer Distanz nachgeschaltet, was zudem mit der Verwendung von Klebstoff an den anzubringenden Etiketten bzw. Banderolen verbunden ist, da diese an den kalten Seitenwänden der gefüllten Becher zum Anhaften gebracht werden müssen. Dies hat bei den vorerwähnten Volltunnelmaschinen seinen Grund darin, daß der Volltunnel, der also die durchlaufende Packstoffbahn auch von unten mit einschließt, eine Dekoranbringung von unten her nicht zuläßt und daß sich zum anderen bei Halbtunnelmaschinen der eingangs genannten Art die Tiefziehstation mehr oder weniger unmittelbar an die Vorwärmstation mit ihren über und unter der Packstoffbahn angeordneten Vorwärmelementen anschließt und insoweit kein Raum besteht, um solche Dekoreinrichtungen vorsehen zu können, wobei noch hinzukommt, daß, sollte eine ausreichende Distanz vorhanden sein, dann kein Widerlager für die Anbringung von Seitenwandetiketten an der Packstoffbahn vorhanden ist.

Der Erfindung liegt demgemäß die Aufgabe zugrunde, eine aseptisch arbeitende FFS-Maschine der eingangs genannten Art dahingehend auszubilden bzw. umzugestalten, daß die Packstoffbahn gleichzeitig bei ihrem Durchlauf mit Seitenwanddekor an den Einzelbechern versehen werden kann.

Diese Aufgabe ist mit einer FFS-Maschine der eingangs genannten Art nach der Erfindung dadurch gelöst, daß zwischen den oberen Vorwärmelementen und dem oberen Teil der Tiefziehstation ein weiteres Vorwärmelement im Halbtunnel angeordnet ist und daß unter dem weiteren Vorwärmelement und dem Unterteil der Tiefziehstation eine Dekoreinrichtung angeordnet ist, wobei die Länge des weiteren Vorwärmelementes dem Raumbedarf der Dekoreinrichtung in Durchlaufrichtung entspricht.

Welche Art von Dekoreinrichtung dabei zur Anwendung kommt, ist bei entsprechend rein konstruktiver Anpassung des Dekorbereiches der Maschine ins Belieben gestellt, da bei erfindungsgemäßer Ausbildung der FFS-Maschine dieser Bereich unter der Packstoffbahn weder durch Vorwärmelemente noch durch Steriltunnelwandungen für die Anordnung solcher Dekoreinrichtungen behindert ist. Es können also ohne weiteres bekannte Dekoreinrichtungen zur Anwendung kommen, mit denen bspw. Etiketten vor Einlauf der noch unverformten Packstoffbahn in die Tiefziehstation mit einem kleinen Rand an diese angeheftet werden. Es sind aber bei entsprechender und bekannter Gestaltung des unteren Negativwerkzeuges der Tiefziehstation auch Banderolierungseinrichtungen verwendbar, mit denen Banderolenzuschnitte in das Tiefziehwerkzeug eingebracht werden. In beiden Fällen gelangen dabei die Dekorzuschnitte zwischen die Formwände und den Packstoff und verbindet sich mit diesen beim Tiefziehen.

Die erfindungsgemäße Anordnung der Dekoreinrichtung in Durchlaufrichtung vor der Tiefziehstation ist für Etikettierungen zwingend, da Seitenwandetiketten mit der Packstoffbahn in die Tiefziehformen für die Becher eingefahren werden müssen und für deren Anheftung an die warme Packstoffbahn ein Widerlager erforderlich ist. Diese wird aber auch für Rundumbanderolierungen insofern für zwingend angesehen, weil sonst die Größe der Bechergruppe im Unterteil der Tiefziehstation begrenzt würde, d.h., es könnten maximal nur doppelreihige Bechergruppen mit Banderolen beschickt werden, wenn eine derartige Banderoliereinrichtung nur ablaufseitig im dort per se verfügbaren Raum hinter der Tiefziehstation angeordnet würde, wobei die Banderolenzu schnitte entgegengesetzt zur Durchlaufrichtung in die Formeintiefungen eingeführt werden.

Die erfindungsgemäße Anordnung eines weiteren Vorwärmelementes mit entsprechender Längenbemessung, so einfach dies auch erscheinen mag, hat also ganz entscheidend eine mehrfache Bedeutung. Zum einen wird damit Raum geschaffen, um vor der Tiefziehstation unter der Packstoffbahn eine Dekoreinrichtung überhaupt anordnen zu können, zum anderen dient das weitere Vorwärmelement als Widerlager für die Etikettenanbringung an die noch unverformte Packstoffbahn, ferner hält es die Temperatur der Packstoffbahn auch dann auf gleicher Höhe, wenn die Dekoreinrichtung eine Banderoliereinrichtung ist, obgleich hierbei die Banderolenabschnitte direkt in die Tiefziehformen eingeführt werden, und schließlich ist dafür gesorgt, daß für beide Dekorarten für die FFS-Maschine gleich bemessene Maschinengestelle benutzt werden können.

Die erfindungsgemäße FFS-Maschine wird nachfolgend anhand der zeichnerischen Darstellung eines Ausführungsbeispieles näher erläutert.

Es zeigt stark schematisiert
- Fig. 1: einen Längsschnitt durch die FFS-Maschine und
- Fig. 2: einen Schnitt durch den Halbtunnel.

Die FFS-Maschine besteht in bekannter Weise aus Sterilisations-A, Vorwärm- B, Tiefzieh- C, Füll- D und Schließstation E und aus Einrichtungen zur Sterilführung der Packstoffbahn 1 bis zur Schließstation E, wobei die Einrichtungen zur Sterilführung aus einem mit Sterilmitteldruck beaufschlagbaren Steriltunnel gebildet sind und der Steriltunnel als sogenannter Halbtunnel 3 ausgebildet ist, der sich, mit einem Sterilmittelanschluß 4 versehen, von der Sterilisationsstation A aus über alle Stationen B bis E erstreckt und mit seinen unteren Tunnelrändern 5 den Packstoffbahnrändern gegenübersteht und wobei die Vorwärmstation B aus über und unter der Packstoffbahn 1 angeordneten, sich in ihrer Länge L entsprechenden Vorwärmelementen 6, 6' gebildet ist.

Um eine solche FFS-Maschine bei günstiger Sterilisation vor der Vorwärmstation B (Ausnutzung der Sterilisationswärme und bei bevorzugt angewandter Dampfsterilisation: Kondensatentfernung in der Vorwärmstation B) beim Durchlauf der Packstoffbahn 1 gleichzeitig zur Dekorausstattung trotz Sterilbetrieb nutzen und das Dekor beim Tiefziehen an der Außenfläche der auszuformenden Becher anbringen zu können, ist für eine solche FFS-Maschine wesentlich, daß zwischen den oberen Vorwärmelementen 6 und dem oberen Teil 7' der Tiefziehstation C ein weiteres Vorwärmelement 6'' im Halbtunnel 3 angeordnet ist und daß unter dem weiteren Vorwärmelement 6'' und dem Unterteil 7 der Tiefziehstation C eine Dekoreinrichtung 8 angeordnet ist, wobei die Länge L des weiteren Vorwärmelementes 6'' dem Raumbedarf der Dekoreinrichtung 8 in Durchlaufrichtung entspricht.

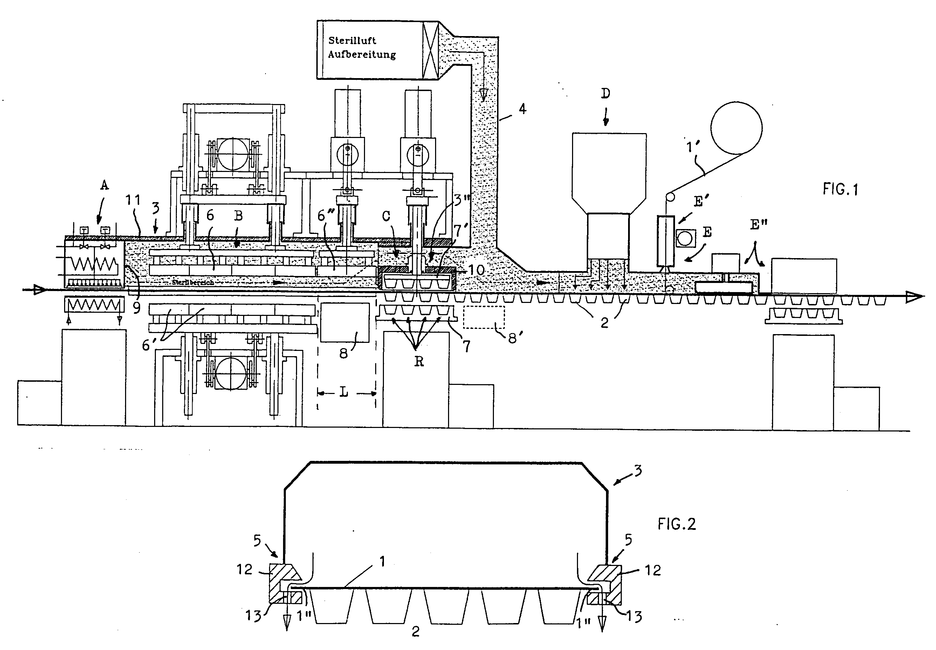

Durch die Ausbildung des Steriltunnels als Halbtunnel 3 bleibt, wie aus der Darstellung in Fig. 1, 2 ersichtlich, die unkritische Unterseite der Packstoffbahn 1 frei zugänglich und die nur als Block dargestellte Dekoranbringeinrichtung 8 ist zwischen den unteren Vorwärmelementen 6', die ebenfalls völlig frei zugänglich sind, und der Tiefziehstation C unmittelbar in deren Bereich angeordnwet. Hier an sich nicht mehr von Interesse sind in Fig. 1 nur der Vollständigkeit halber die Füllstation D und die Schließstation E, die mit Sterilisationseinrichtungen E' für die Deckfolie 1' und mit Vorsiegel- und Hauptsiegeleinrichtungen E'' ausgestattet ist, dargestellt.

Die Vorwärmstation B erstreckt sich entscheidend durch das weitere Vorwärmelement 6'' aus den genannten Gründen bis zur Tiefziehstation C und damit über den Anordnungsbereich der Dekoreinrichtung 8, die sich unterhalb der noch nicht verformten Packstoffbahn 1 befindet. Im Bereich der Tiefziehstation C bildet der Halbtunnel 3 trennwandfrei über dem stationären Oberteil 10 der Tiefziehstation C einen Passagekanal 3'' für das Sterilmittel (Sterilluft), für dessen Zufuhr somit nur ein Sterilmittelanschluß 4 erforderlich ist, der aus den genannten Gründen und wie dargestellt hinter der Tiefziehstation C in den Halbtunnel 3 einmündet.

Die nur als Block dargestellte Dekoreinrichtung 8 bedarf, egal ob es sich um eine Etikettier- oder Banderoliereinrichtung handelt, keiner näheren Erläuterung, da solche Einrichtungen hinlänglich bekannt sind, wobei man es im vorliegenden Fall ohne weiteres in der Hand hat, diese konstruktiv so schmal wie möglich auszubilden.

Vorteilhaft ist ferner die Sterilisationsstation A bei in diesem Bereich gleichem Halbtunnelquerschnitt durch eine Trennwand 9 vom Halbtunnel 3 abgeteilt ausgebildet, d.h., für die Sterilisationsstation A ist kein besonderes Gehäuse erforderlich, da sie den Anfang des mit einer Wärmeisolation 11 versehenen Halbtunnels 3 bildet, dessen untere, den Packstoffbahnrändern 1'' gegenüberstehende Ränder 5, wie in Fig. 2 dargestellt, in Form von Führungsleisten 12 ausgebildet, die mit kleinen Bohrungen 13 für den Austritt eines geringen Teiles der unter geringem Überdruck stehenden Sterilluft versehen sind.

Beim dargestellten Ausführungsbeispiel in Fig. 1 besteht die Tiefziehstation C, bzw. bestehen deren Formwerkzeuge aus vier quer zur Durchlaufrichtung angeordneten Reihen R. In diesem Fall müssen also die Banderolenzuschnitte von zwei Seiten dem unteren Teil 7 der Tiefziehstation C zugeführt werden. In diesem Fall wird also auf der Ablaufseite, die dafür per se frei ist, eine entsprechend ausgebildete weitere Dekoreinrichtung 8' angeordnet.

## Patentansprüche

1. Aseptisch arbeitende FFS-Maschine zum Formen, Seitenwanddekorieren, Füllen und Schließen von an einer getaktet geförderten Packstoffbahn (1) auszubildenden Bechern (2), bestehend aus Sterilisations-(A), Vorwärm-(B), Tiefzieh-(C), Füll-(D) und Schließstation (E) und aus Einrichtungen zur Sterilführung der Packstoffbahn (1) bis zur Schließstation (E), wobei die Einrichtungen zur Sterilführung aus einem mit Sterilmittel druckbeaufschlagbaren Steriltunnel gebildet sind und der Steriltunnel als sogenannter Halbtunnel (3) ausgebildet ist, der sich, mit einem Sterilmittelanschluß (4) versehen, von der Sterilisationsstation (A) aus über alle Stationen (B bis E) erstreckt und mit seinen unteren Tunnelrändern (5) den Packstoffbahnrändern gegenübersteht und wobei die Vorwärmstation (B) aus über und unter der Packstoffbahn (1) angeordneten, sich in ihrer Länge (L) entsprechenden Vorwärmelementen (6, 6') gebildet ist,
**dadurch gekennzeichnet,**
daß zwischen den oberen Vorwärmelementen (6) und dem oberen Teil (7') der Tiefziehstation (C) ein weiteres Vorwärmelement (6'') im Halbtunnel (3) angeordnet ist und daß unter dem weiteren Vorwärmelement (6'') und dem Unterteil (7) der Tiefziehstation (C) eine Dekoreinrichtung (8) angeordnet ist, wobei die Länge (L) des weiteren Vorwärmelementes (6'') dem Raumbedarf der Dekoreinrichtung (8) in Durchlaufrichtung entspricht.

2. FFS-Maschine nach Anspruch 1,
**dadurch gekennzeichnet,**
daß bei Ausbildung der Dekoreinrichtung in Form einer Banderoliereinrichtung diese zweiteilig ausgebildet und ein Teil vor und ein Teil (8') hinter dem Unterteil der Tiefziehstation (C) angeordnet ist.

## Claims

1. An aseptically operating FFS machine for molding, side-wall decorating, loading and closing of beakers (2) to be formed on a cyclically conveyed web (1) of packing material, comprising a sterilizing station (A), a preheating station (B), a deep-drawing station (C), a loading station (D) and a closing station (E) as well as means for the sterilized guidance of the web (1) of packing material to the closing station (E), with the means for the sterilized guidance being formed of a sterile tunnel to which a sterile agent is applied under pressure, and with the sterile tunnel being of a so-called semi-tunnel configuration (3) provided with a nozzle (4) for the sterile agent and extending from the sterilizing station (A) via all of the stations (B through E), and with the bottom tunnel edges (5) thereof being arranged opposite the edges of the web of packing material, and with the preheating station (B) being formed of preheating elements (6,6') disposed above and below the web (1) of packing material and being of identical lengths (L), characterized in that provided between the upper preheating elements (6) and the upper pail (7') of the deep-drawing station (C ) within the semi-tunnel (3) is another preheating element (6''), and that located below the other preheating element (6'') and the bottom part (7) of the deep-drawing station (C) is a decorating means (8), with the length (L) of the other preheating element (6'') corresponding to the space requirement of the decorating means (8) in the passage direction.

2. An FFS machine according to claim 1, characterized in that the decorating means when configured in the form of a banderolizer is of a bipartite design, with one part being arranged before and the other pail (8') behind the bottom part of the deep-drawing station (C).

## Revendications

1. Machine à système de fabrication flexible fonctionnant de manière aseptique pour former, décorer les parois latérales, remplir et fermer des gobelets (2) qui doivent être formés sur une bande continue de matériau d'emballage (1) transportée de manière synchronisée, constituée par un poste de stérilisation (A), un poste de préchauffage (B), un poste d'emboutissage (C), un poste de remplissage (D) et un poste de fermeture (E) et par des dispositifs pour le guidage stérile de la bande continue de matériau d'emballage (1) jusqu'au poste de fermeture (E), les dispositifs pour le guidage stérile étant formés par un tunnel stérile pouvant être chargé par une pression de substance stérile et le tunnel stérile étant configuré comme ce qu'il est convenu d'appeler un demi-tunnel (3) qui s'étend, en étant pourvu d'un raccord de substance stérile 14), à partir du poste de stérilisation (A) sur toutes les stations (B à E) et qui est en face, avec ses bords inférieurs de tunnel (5), des bords de bande continue de matériau d'emballage et le poste de préchauffage (B) étant formé par des éléments de préchauffage (6, 6') se correspondant en longueur (L), placés au-dessus et au-dessous de la bande continue de matériau d'emballage (1),
caractérisée en ce
qu'un élément supplémentaire de préchauffage (6'') est placé dans le demi-tunnel (3) entre les éléments de préchauffage supérieurs (6) et la partie supérieure (7') du poste d'emboutissage (C) et qu'un dispositif de décor (8) est placé sous l'élément de préchauffage supplémentaire (6'') et la partie inférieure (7) du poste d'emboutissage (C), la longueur (L) de l'élément de préchauffage supplémentaire (6'') correspondant à l'encombrement du dispositif de décor (8) dans le sens du passage.

2. Machine à système de fabrication flexible selon la revendication 1,
caractérisée en ce
que, pour la configuration du dispositif de décor en forme de dispositif d'application de banderoles, celui-ci est configuré en deux parties et qu'une partie est placée devant et une partie (8') derrière la partie inférieure du poste d'emboutissage (C).
